# EUROPEAN PATENT APPLICATION

(11) **EP 3 960 363 A1**
(43) Date of publication of application: **02.03.2022**
(21) Application number: 21191699.4
(22) Date of filing: 17.08.2021
(51) Int. Cl.: B23K 26/14, B23K 26/21, B23K 26/70, B23K 101/36, B23K 103/04, B23K 103/12, B23K 103/08, B23K 103/18, B23K 103/00

(54) **WELDING WINDOW DEVICE**

(30) Priority: 19.08.2020 US 202063067647 P; 11.08.2021 US 202117399690
(71) Applicant: Transportation IP Holdings, LLC, Norwalk, CT 06851 (US)
(72) Inventor: Pfendler, James, Erie, 16531 (US); Badders, Gregory, Erie, 16531 (US); Thomas, Jeffrey Alan, Erie, 16531 (US); Sama, Santosh Reddy, Erie, 16531 (US)
(74) Representative: Laufhütte, Dieter

(57) **Abstract**

A welding window device includes an elongated body that defines a welding cavity that extends through the body from a top side to a bottom side. The welding cavity is framed by an inlet end, an outlet end, and lateral sides of the body. The body includes one or more gas channels inwardly extending through one or more of the first lateral side or the second lateral side from an inlet opening in the inlet end toward the outlet end of the body. The gas channels include nozzle openings inwardly oriented toward the welding cavity. The gas channels are positioned in the body to direct a gas into the welding cavity during welding of other bodies together within the welding cavity.

## Description

### CROSS-REFERENCE TO RELATED APPLICATIONS

This application claims priority to U.S. Provisional Application No. 63/067,647, which was filed on 19-August-2020, and the entire disclosure of which is incorporated herein by reference.

### BACKGROUND

### Technical Field.

The subject matter described herein relates to welding devices.

### Discussion of Art.

Joining materials to be welded together can require close and intimate contact between surfaces of the materials. For example, laser welding of battery cell tabs to bus bars (or other electronic components) can require that the surfaces of the components be held together during welding. Variations in the components, however, can make this difficult. For example, variations in thicknesses of battery cell tabs can increase the difficulty in ensuring that all of the tabs are held in close contact with the bus bars while also welding the tabs and bus bars together for many bus bars and tabs.

Some laser welding can require use of a shield gas (e.g., an inert gas such as argon) in the immediate vicinity of the weld location. It can be difficult to ensure that the shield gas completely surrounds the locations of the welds without also building up exhaust from the welding in the immediate vicinity of the weld locations.

Additionally, welding components together can generate molten splash as a byproduct. This splash can damage the components. While a welding blast shield can be used, it can be difficult to use some blast shields given the small clearances in some welding applications.

### BRIEF DESCRIPTION

In one example, a welding window device includes an elongated body extending from an inlet end to an opposite outlet end in a first direction, extending from a first lateral side to an opposite, second lateral side in a second direction that is transverse to the first direction, and extending from a bottom side to an opposite top side in a third direction that is transverse to the first direction and the second direction. The body defines a welding cavity that extends through the body from the top side to the bottom side. The welding cavity is framed by the inlet end, the outlet end, the first lateral side, and the second lateral side. The body includes one or more gas channels inwardly extending through one or more of the first lateral side or the second lateral side from an inlet opening in the inlet end toward the outlet end of the body. The one or more gas channels include nozzle openings inwardly oriented toward the welding cavity. The one or more gas channels are positioned in the body to direct a gas into the welding cavity during welding of other bodies together within the welding cavity.

A method (for welding bodies to each other) includes clamping a welding window device onto a first body that is to be welded to a second body and directing a curtain gas into one or more gas channels extending into the welding window device. The one or more gas channels are shaped to direct the curtain gas into a welding cavity formed by the welding window device. The method also includes directing energy into the welding cavity of the welding window device to weld the first body to the second body inside the welding cavity and within the curtain gas in the welding cavity.

Another welding device includes an elongated body extending from an inlet end to an opposite outlet end in a first direction, extending from a first lateral side to an opposite, second lateral side in a second direction that is transverse to the first direction, and extending from a bottom side to an opposite top side in a third direction that is transverse to the first direction and the second direction. The body defines a welding cavity that extends through the body from the top side to the bottom side. The welding cavity is framed by the inlet end, the outlet end, the first lateral side, and the second lateral side. The bottom side of the body includes a race track rim that at least partially encircles the welding cavity along the bottom side and that protrudes from the bottom side away from the welding cavity. The race track rim is positioned on the body to be in biasing contact with one or more other bodies during a welding operation within the welding cavity.

A welding assembly includes a frame and two or more of the welding window devices coupled with the frame. The welding window devices are coupled to the frame in locations for concurrent or simultaneous welding of components together within the welding cavities of the welding window devices.

A kit of parts includes a frame and two or more of the welding window devices. The frame and the two or more of the welding window devices are configured for the two or more of the welding window devices to be coupled with the frame. The welding window devices are configured to be coupled to the frame in locations for concurrent or simultaneous welding of components together within the welding cavities of the welding window devices.

### BRIEF DESCRIPTION OF THE DRAWINGS

The inventive subject matter may be understood from reading the following description of non-limiting embodiments, with reference to the attached drawings, wherein below:
Figure 1 illustrates a perspective view of one example of a welding window device;
Figure 2 illustrates a bottom plan view of another example of a welding window device;
Figure 3 illustrates an elevational side view of the welding window device shown in Figure 2;
Figure 4 illustrates a perspective view of one example of the outlet end of the welding window device shown in Figures 2 and 3;
Figure 5 illustrates a perspective view of one example of the gas channel in the welding window device shown in Figures 2 through 4;
Figure 6 illustrates a cross-sectional view of one example of the welding window device shown in Figures 2 through 5 along line 6-6 in Figure 3;
Figure 7 illustrates a bottom plan view of another example of a welding window device;
Figure 8 illustrates a cross-sectional view of the welding window device along line 8-8 shown in Figure 7;
Figure 9 illustrates a bottom plan view of another example of a welding window device;
Figure 10 illustrates a cross-sectional view of the welding window device along line 10-10 shown in Figure 9;
Figure 11 illustrates a bottom plan view of another example of a welding window device;
Figure 12 illustrates a cross-sectional view of the welding window device along line 12-12 shown in Figure 11;
Figure 13 illustrates a bottom plan view of another example of a welding window device;
Figure 14 illustrates a cross-sectional view of the welding window device along line 14-14 shown in Figure 13;
Figure 15 illustrates a bottom plan view of another example of the welding window device;
Figure 16 illustrates a cross-sectional view of the welding window device along line16-16shown in Figure 15;
Figure 17 illustrates another example of a welding window device;
Figure 18 illustrates one example of a multi-welding window device assembly;
Figure 19 illustrates a flowchart of one example of a method 1700 for welding using a welding window device;
Figure 20 illustrates a side elevational view of another example of a welding window device;
Figure 21 illustrates a top plan view of the welding window device shown in Figure 20; and
Figure 22 illustrates a perspective view of an inlet side of the welding window device shown in Figures 20 and 21.

### DETAILED DESCRIPTION

One or more embodiments of the inventive subject matter described herein provide welding window devices useful for welding surfaces of components together while protecting nearby components from weld splatter, keeping a shield gas around locations being welded together (e.g., weld locations), and/or eliminating weld exhaust from remaining around the weld locations. Optionally, a bottom side of the devices may include a race track rim that at least partially encircles a welding cavity in which welding occurs along the bottom side and that protrudes from the bottom side away from the welding cavity. The race track rim can be positioned to be in biasing contact with one or more other bodies during a welding operation within the welding cavity.

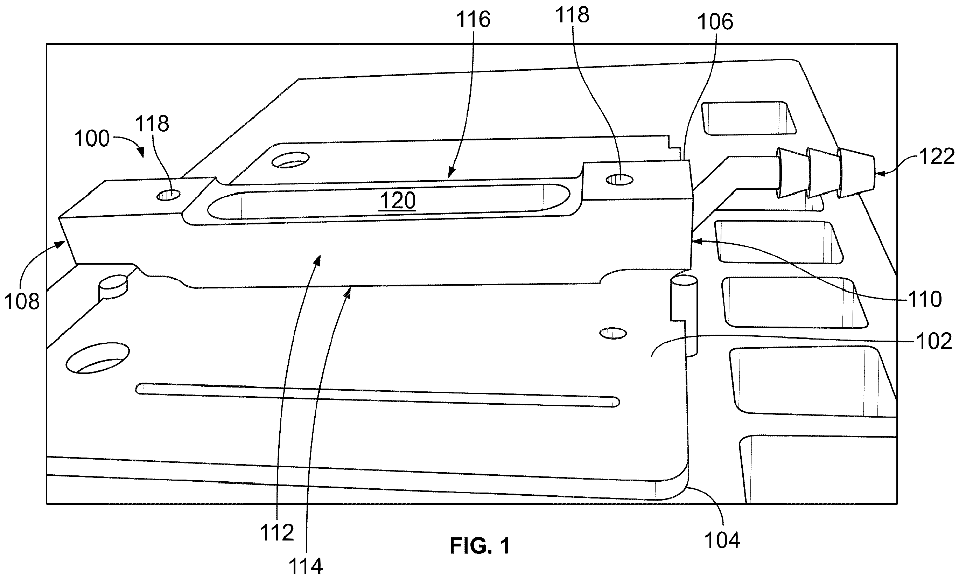

Figure 1 illustrates a perspective view of one example of a welding window device 100. The welding window device 100 can be coupled to a first component 102 being welded to a second component 104. One of these components can be a bus bar while the other component is a conductive tab that is conductively coupled with one or more battery cells. The welding window device includes an elongated body 106 that extends from an outlet end 108 to an opposite inlet end 110 in a first direction, from a first lateral side 112 to an opposite, second lateral side (not visible in Figure 1) in a second direction, and extends from a bottom side 114 to an opposite top or upper side 116 in a third direction. The first, second, and third directions may be transverse to each other. For example, the first, second, and third directions may be orthogonal to each other (e.g., the first direction can be an x-direction or axis, the second direction can be a y-direction or axis, and the third direction can be a z-direction or axis). The top side of the body is a non-planar surface in the illustrated embodiment, but optionally can be a planar surface.

The body can have fastener openings 118 through which fasteners (e.g., screws, bolts, etc.) are positioned. One end of these fasteners may upwardly project from the top side of the elongated body and an opposite end of the fasteners may project in an opposite direction from the second component. The fasteners may apply a compressive force on the welding window device and the components to secure the bottom side of the body to a surface of the first component.

The body of the welding window device includes a welding cavity 120 that extends entirely through the body from the top side to the bottom side. This welding cavity is framed by the body as shown in Figure 1. The body forms a welding void that is bounded by the surface of the first component and the inner surfaces of the body that extend around the cavity. The inner surfaces of the body frame the welding void by extending around the welding void. The welding void is open along the top side of the body. This open side to the welding cavity or void can provide access to locations of the components that are to be welded together. That is, the components can be welded together through or via the open side in the body along the top side of the body.

The body also includes one or more gas channels (not visible in Figure 1) that inwardly extend through the body from an inlet coupler 122 having an inlet conduit. As described herein, the gas channels may be non-linear conduits that curve within the body. The inlet coupler is shown as a barbed connection that projects from the inlet side of the body, but optionally may be another type conduit or may be an opening extending into the inlet side of the body (without projecting from the inlet side of the body). A flexible hose or tube can be placed over the barbs of the inlet coupler to secure the hose or tube to the inlet coupler. This hose or tube also can be coupled with a container (e.g., a pressurized tank and/or valve) that holds and supplies the shield gas to the device. The shield gas optionally can be referred to as a curtain gas or a welding curtain gas. The gas channels inwardly extend into the body from the inlet conduit. These gas channels can extend through one or both the lateral sides of the body from the inlet conduit toward the outlet end of the body. The gas channels include nozzle openings (not visible in Figure 1) that are inwardly oriented toward the welding cavity. These nozzle openings are fluidly coupled with the gas channels. The gas channels are positioned in the body to direct a gas (received via the inlet conduit) into the welding cavity during welding of the components. This gas can be a shield gas that fills the welding cavity or void during welding. Optionally, the body can include one or more drain outlets extending from the welding cavity out of the body through the outlet end of the body.

The body may be a unitary body formed via an additive manufacturing process. For example, the body may be a monolithic, additively manufactured structure with interior surfaces formed by successively depositing (e.g., printing) multiple layers of materials on each other to form a single body that does not have any seams or interfaces. Using additive manufacturing to produce the devices described herein can allow for the shapes, sizes, and/or orientations of gas channels, nozzles, and the like, in the devices to be formed in ways that are not available or practical in other manufacturing techniques (e.g., casting).

The body may be formed from one or more materials that are able to withstand elevated temperatures commonly associated with laser welding and/or that are able to tolerate receipt of welding splatter (e.g., the materials can have laser welding splatter contact the body without forming pits in the body, corroding the body, or otherwise removing portions of the body. For example, the body can be formed from stainless steel, copper or copper alloys, inconel or Inconel alloys, magnesium or magnesium alloys, ceramic matrix composites (CMCs), ultra-high-temperature ceramics (UHTCs), or a high temperature plastic (e.g., polyphenylene sulfide, liquid crystal polymer polyetheretherketone, polyphthalamide, polysulfones, polyetherimides, polyphenylsulfone, etc.).

In operation, the body and components to be welded together are clamped together using fasteners, as described above. The shield gas (e.g., argon) is directed into the gas channels via the inlet conduit. The gas channels and nozzles direct the shield gas into the welding void. The gas channels and nozzles are shaped and/or positioned to ensure that the shield gas is directed to the location(s) where the weld between the two components is being formed within the welding cavity. The depth of the welding cavity (as defined by the height of the body or distance from the bottom side to the top side of the body) can help protect nearby objects from splash from the weld reaching the objects. For example, the body can prevent weld splatter from leaving the location of the weld (or at least reduce the amount of splatter leaving the welding cavity) and reaching nearby battery cells. Additionally, where the welding window device is used for laser welding, the body of the device can help protect nearby objects (e.g., battery cells) from being damaged by a misaligned laser.

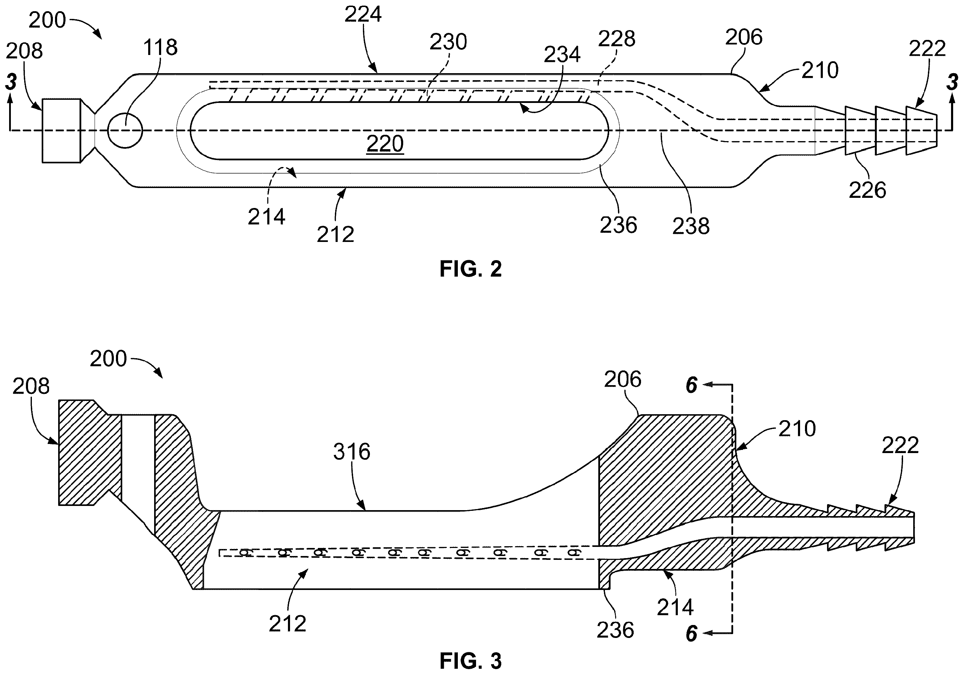

Figure 2 illustrates a bottom plan view of another example of a welding window device 200. Figure 3 illustrates an elevational side view of the welding window device shown in Figure 2. The device shown in Figures 2 and 3 can represent another example of the welding window device shown in Figure 1. Similar to the device shown in Figure 1, the device shown in Figures 2 and 3 includes an elongated body 206 that extends from an outlet side 208 to an inlet side 210 along the first direction, from a first lateral side 212 to an opposite lateral side 224 (shown in Figure 2) along the second direction, and from a bottom side 214 to an opposite upper side 316 (shown in Figure 3) along the third direction. Like the welding window device shown in Figure 1, the body of the welding window device shown in Figures 2 and 3 frames and defines a welding cavity 220 (shown in Figure 2). The welding cavity has the shape of a rectangle with rounded corners, but alternatively may have another shape (e.g., the shape of a polygon or a rounded shape other than an oval). The body includes a fastener opening 118 at or near the outlet end of the body. For example, the fastener opening is closer to the outlet end than the inlet end of the body.

The body shown in Figures 2 and 3 includes an inlet coupler 222 having an inlet conduit 226 that is fluidly coupled with a gas channel 228. As shown in Figure 2, the gas channel extends through the body on only one side of the welding cavity. The gas channel can be disposed between one of the lateral sides of the body and the welding cavity. The gas channel is curved in the illustrated example. The gas channel can enter into the body from the inlet conduit along a center vertical plane 238 of the body that is located midway between the lateral sides. As shown in Figure 2, the gas channel can be centered on or otherwise extend through this center vertical plane and curve toward one of the lateral sides (e.g., the lateral side 224) from this center vertical plane. As shown in Figure 3, the gas channel can curve downward toward the bottom side as well. The gas channel is curved in that the gas channel transitions downward and toward one lateral side from the inlet conduit using one or more radii of curvature and without sharp edges at transitions between different portions of the gas channel.

Several nozzles 230 are fluidly coupled with and extend from the gas channel to an inner surface 234 of the body that extends around and frames the welding cavity. These nozzles direct the shield gas received via the inlet conduit into the welding cavity. In the illustrated example, the nozzles are transversely oriented with respect to an inner surface 234 of the body that extends around the welding cavity. For example, each of the nozzles is elongated along a direction that is oriented along an angle (e.g., an acute angle) with respect to the inner surface of the body and that is oriented away from the inlet end of the body. This angle may be the same for all nozzles or may differ for at least some of the nozzles. The nozzles are not oriented downward toward the bottom side of the body in the illustrated embodiment. Alternatively, the nozzles may be oriented downward. The size, number, arrangement, and orientation of the nozzles may be selected (during manufacture of the body) to produce a uniform amount and flow of the shield gas across the components being welded together within the welding cavity.

The bottom side of the body includes a racetrack rim 236 that encircles at least a portion of the welding cavity along the bottom side. This rim also can protrude from the bottom side away from the welding cavity, as shown in Figure 3. The rim can assist in ensuring a sealed or closed interface between the body and the upper component 102 (shown in Figure 1) being welded to the other component. For example, the rim can be a narrow width projection that can press into the component and be in biasing contact with the component(s) to ensure that no gaps between the body and the component exist. In contrast, without the rim, unevenness in the bottom side of the body may be more likely (due to the larger surface area of the bottom side than the rim), which can cause gaps to exist between the body and the component. These gaps can allow for the shield gas to escape from the welding cavity and interfere with creating the weld within the welding cavity.

The body can have a thickness dimension that prevents splatter from welding within the welding cavity from escaping the welding cavity. For example, the height of the body from the bottom side to the top side can provide the welding cavity with a depth that prevents welding splatting from escaping the welding cavity. Some welding splatter may adhere to the inner surface of the body within the welding cavity. This splatter can be machined off the inner surface. The smooth shape of the inner surface can assist with more easily machining off the solidified welding splatter when compared with another shape of the inner surface. For example, an inner surface having tight corners can be more difficult to remove solidified welding splatter.

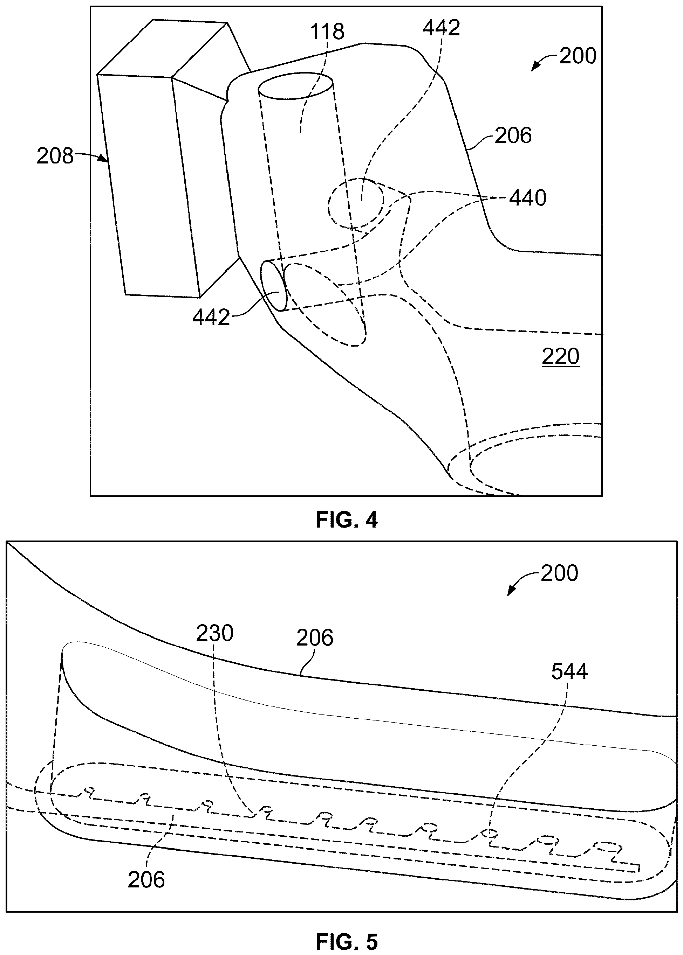

Figure 4 illustrates a perspective view of one example of the outlet end of the welding window device shown in Figures 2 and 3. The outlet end can include one or more drain outlets 440 that extend from the welding cavity to the outer surface of the body of the welding window device. The drain outlets provide conduits through which exhaust from the welding within the welding cavity can exit the welding cavity. This can ensure that welding exhaust is removed from the cavity and replaced by new or additional shield gas. In the illustrated example, the drain outlets intersect at the inner surface of the body within the welding cavity and diverge toward the outlet end of the body. The drain outlets curve around the fastener opening that extends through the body. The drain outlets extend to drain openings 442 on opposite sides of the fastener opening to direct exhaust out of the welding cavity.

Figure 5 illustrates a perspective view of one example of the gas channel in the welding window device shown in Figures 2 through 4. In the view of Figure 5, the inlet end of the body is to the left side of the Figure and the outlet end is to the right side of the Figure. The size of the gas channel and/or the sizes of the nozzles may vary at different locations along the length of the body of the device to provide for a more even flow of the shield gas into the welding cavity along the length of the gas channel. For example, as shown in Figures 3 and 5, the gas channel may have a tapered shape such that the diameter of the gas channel becomes smaller in locations closer to the outlet end of the body than in locations that are closer to the inlet end of the body. This tapered shape can help increase pressure of the shield gas within the gas channel to ensure that the shield gas is delivered to the nozzle that is farthest from the inlet end of the body.

The nozzles of the gas channel have openings 544 into the welding cavity through which the shield gas is delivered from the gas channel and the nozzles into the welding cavity. The sizes of these openings can be smaller in locations that are closer to the inlet end of the body and larger in locations that are closer to the outlet end of the body. The tapered shape of the gas channel and/or the increasing sizes of the nozzle openings can counteract pressure drop of the shield gas in the gas channel and ensure that the flow of the shield gas out of the nozzle openings is equivalent or approximately equivalent (e.g., does not vary by more than 5%, by more than 3%, or by more than 1% in different embodiments) along the length of the gas channel from the nozzle opening that is closest to the inlet end of the body to the nozzle opening that is farthest from the inlet end of the body.

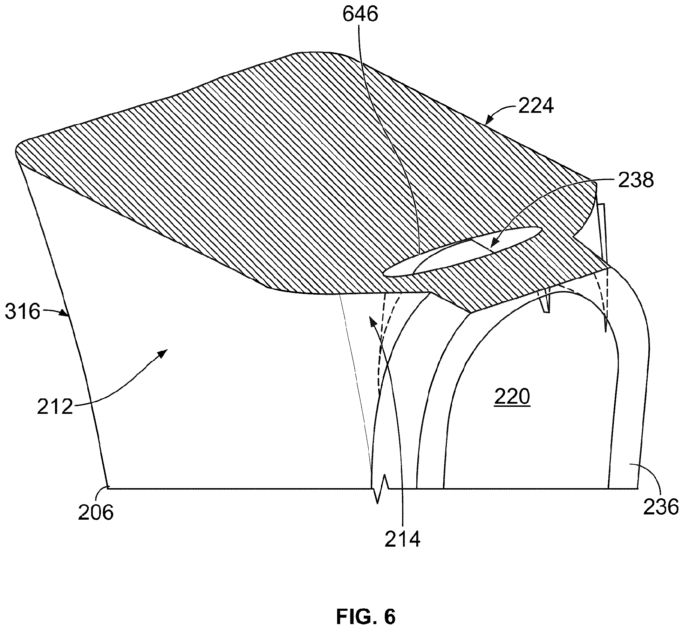

Figure 6 illustrates a cross-sectional view of one example of the welding window device shown in Figures 2 through 5 along line 6-6 in Figure 3. The cross-sectional view shows the transition from the inlet conduit 226 to the gas channel 228 in the body of the welding window device. The inlet conduit may have a circular cross-sectional shape and the gas channel may have an oval shape 646 at the intersection or transition between the inlet conduit and the gas channel. The transition from the circular cross-section of the inlet conduit to the smaller oval cross-section of the gas channel can form a fish-tail shape. The cross-sectional area of the oval shape at the plane along line 6-6 in Figure 6 may be smaller than the cross-sectional area of the gas channel at this same plane. The decreasing cross-sectional area of the flow path of the shield gas from the inlet conduit to the gas channel can increase pressure of the shield gas. This can help ensure that the gas reaches the end of the gas channel (and the last nozzle along the length of the gas channel).

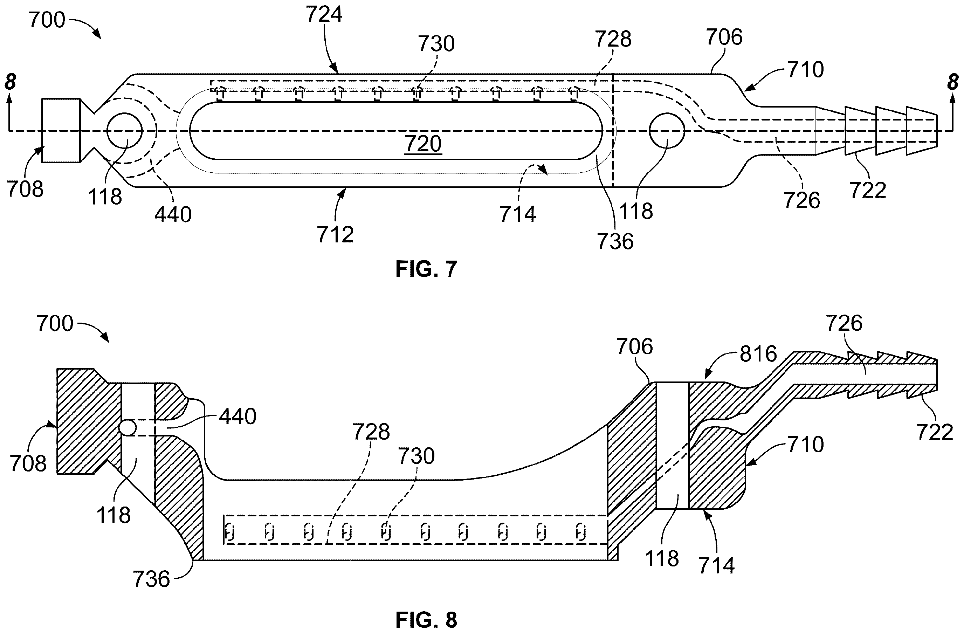

Figure 7 illustrates a bottom plan view of another example of a welding window device 700. Figure 8 illustrates a cross-sectional view of the welding window device along line 8-8 shown in Figure 7. The device shown in Figures 7 and 8 can represent another example of the welding window device shown in Figure 1. Similar to the device shown in Figure 1, the device shown in Figures 7 and 8 includes an elongated body 706 that extends from an outlet side 708 to an inlet side 710 along the first direction, from a first lateral side 712 to an opposite lateral side 724 along the second direction, and from a bottom side 714 to an opposite upper side 816 along the third direction. The body frames and defines a welding cavity 720. The welding cavity has the shape of a rectangle with rounded corners but alternatively may have another shape (e.g., the shape of a polygon or a rounded shape such as an oval). In contrast to the body of the welding device shown in Figures 2 through 6, the body shown in Figures 7 and 8 includes two fastener openings 118 on opposite sides of the welding cavity, with one fastener opening between the outlet end and the welding cavity and another fastener opening between the inlet end and the welding cavity.

The body shown in Figures 7 and 8 includes an inlet coupler 722 having an inlet conduit 726 that is fluidly coupled with a gas channel 728. The inlet coupler can be barbed, as shown in Figures 7 and 8, or may include another type of connection (e.g., a threaded connection). Similar to described above, the gas channel extends through the body on only one side of the welding cavity and is curved downward and toward one of the lateral sides. In contrast to the gas channel of the welding window device shown in Figures 2 through 6, the gas channel shown in Figures 7 and 8 is not tapered. The gas channel may have a substantially equivalent cross-sectional along the length of the gas channel that is between the welding window and the lateral side (e.g., the cross-sectional size of the gas channel between the first and last nozzle does not vary or differ by more than 5%, by more than 3%, or by more than 1% in different embodiments).

Several nozzles 730 are fluidly coupled with and extend from the gas channel to the inner surface of the body that extends around and frames the welding cavity. In contrast to the nozzles of the welding window device shown in Figures 2 through 6, the nozzles shown in Figures 7 and 8 are perpendicularly oriented toward the inner surface and have openings that are of substantially equivalent size (e.g., the sizes of the nozzle openings do not vary or differ by more than 5%, by more than 3%, or by more than 1% in different embodiments). These nozzles direct the shield gas received via the inlet conduit into the welding cavity, as described herein. The size, number, arrangement, and orientation of the nozzles may be selected (during manufacture of the body) to produce a uniform amount and flow of the shield gas across the components being welded together within the welding cavity. The bottom side of the body includes a racetrack rim 736, as described above. The body can have a thickness dimension that prevents splatter from welding within the welding cavity from escaping the welding cavity, also as described above. The outlet end can include one or more of the drain outlets 440 described above.

One additional difference between the welding window devices shown in Figures 2 through 8 is the height of the inlet couplers 222, 722. As shown in Figure 8, the inlet coupler 722 is disposed vertically farther from the plane in which the bottom side of the racetrack rim 736 is disposed than the inlet coupler 222 is disposed vertically from the plane in which the bottom side of the racetrack rim 236 is disposed. This different vertical location of the inlet coupler may allow for the tube or hose that couples with the inlet coupler 722 to be more easily attached or separated from the inlet coupler 722. But, the higher location of the inlet coupler 722 compared to the inlet coupler 222 also can involve a longer conduit to the gas channel and nozzles, which can result in a larger pressure drop in the shield gas along the length of the gas channel and more uneven distribution of the shield gas within the welding cavity. The pressure at which the shield gas is supplied can be increased to account for this larger pressure drop.

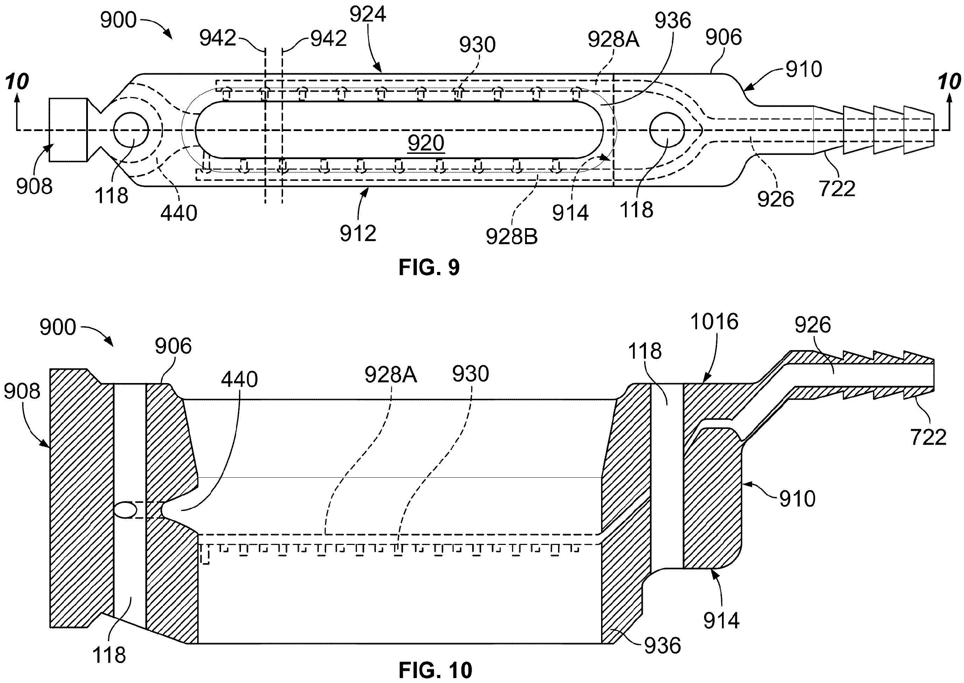

Figure 9 illustrates a bottom plan view of another example of a welding window device 900. Figure 10 illustrates a cross-sectional view of the welding window device along line 10-10 shown in Figure 9. The device shown in Figures 9 and 10 can represent another example of the welding window device shown in Figure 1. Similar to the device shown in Figure 1, the device shown in Figures 9 and 10 includes an elongated body 906 that extends from an outlet side 908 to an inlet side 910 along the first direction, from a first lateral side 912 to an opposite lateral side 924 along the second direction, and from a bottom side 914 to an opposite upper side 1016 along the third direction. The body frames and defines a welding cavity 920, and also includes two fastener openings 118 on opposite sides of the welding cavity, with one fastener opening between the outlet end and the welding cavity and another fastener opening between the inlet end and the welding cavity. The bottom side of the body includes a racetrack rim 936, as described above. The outlet end can include one or more of the drain outlets 440. The body can have a larger thickness dimension than the bodies 206, 706. This larger body can prevent splatter from welding within the welding cavity from escaping the welding cavity, also as described above.

The body includes the inlet coupler 722 having an inlet conduit 926. One difference between the device shown in Figures 9 and 10 and the device shown in Figures 2 through 6 is that the inlet conduit 226 is a single channel or conduit that extends from the inlet coupler to the single interior gas channel with no divisions, branches, splits, bifurcations, or the like. Conversely, the inlet conduit of the device shown in Figures 9 and 10 divides, splits, or bifurcates into multiple (e.g., two) separate branches of conduits within the body between the inlet end and the welding cavity. Each of these separate branches is coupled with a different gas channel 928A, 928B. Another difference between the devices 200, 700 is that the device 700 includes multiple (e.g., two) gas channels, with each gas channel inside the body between one of the lateral sides and the welding cavity. The gas channels are not tapered in the illustrated example, but optionally may be tapered like the gas channel 228 shown in Figure 2.

Each of the gas channels includes several nozzles 930 that are fluidly coupled with and extend from the gas channel to the inner surface of the body that extends around and frames the welding cavity. The nozzles may be oriented downward toward the bottom side of the body, as shown in Figure 10. These nozzles direct the shield gas into the welding cavity, as described above. In the illustrated example, the nozzles in each gas channel are longitudinally offset from each other (e.g., offset from each other along the length of the body). For example, a center line or axis 942 that is disposed along an intersection between the center of each of the nozzles and the corresponding gas channel on one side of the welding cavity is located between the corresponding center lines of the nozzles in the other gas channel. This can provide for a more even distribution or flow of shield gas into the welding cavity. Alternatively, the nozzles may be aligned with each other such that the center line of each nozzle in one gas channel coincides with the center line of a nozzle in the other gas channel.

One additional difference between the welding window devices shown in Figures 2 through 8 is the height of the inlet couplers 222, 722. As shown in Figure 8, the inlet coupler 722 is disposed vertically farther from the plane in which the bottom side of the racetrack rim 736 is disposed than the inlet coupler 222 is disposed vertically from the plane in which the bottom side of the racetrack rim 236 is disposed. This different vertical location of the inlet coupler may allow for the tube or hose that couples with the inlet coupler 722 to be more easily attached or separated from the inlet coupler 722. But, the higher location of the inlet coupler 722 compared to the inlet coupler 222 also can involve a longer conduit to the gas channel and nozzles, which can result in a larger pressure drop in the shield gas along the length of the gas channel and more uneven distribution of the shield gas within the welding cavity. The pressure at which the shield gas is supplied can be increased to account for this larger pressure drop.

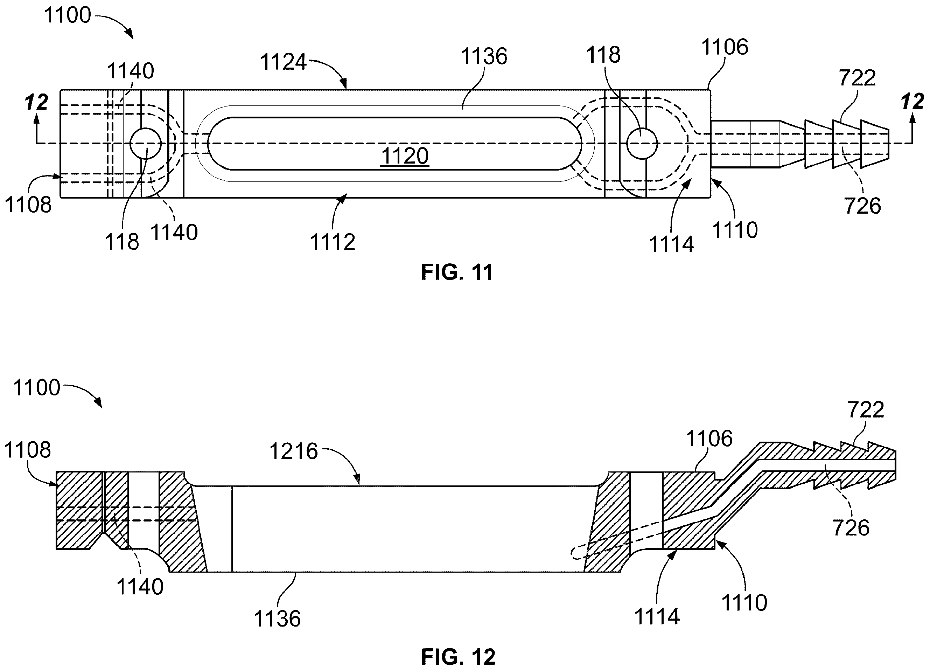

Figure 11 illustrates a bottom plan view of another example of a welding window device 1100. Figure 12 illustrates a cross-sectional view of the welding window device along line 12-12 shown in Figure 11. The device shown in Figures 11 and 12 can represent another example of the welding window device shown in Figure 1. Similar to the device shown in Figure 1, the device 1100 includes an elongated body 1106 that extends from an outlet side 1108 to an inlet side 1110 along the first direction, from a first lateral side 1112 to an opposite lateral side 1124 along the second direction, and from a bottom side 1114 to an opposite upper side 1216 along the third direction. The body frames and defines a welding cavity 1120, and also includes two fastener openings 118 on opposite sides of the welding cavity, as described above. The bottom side of the body includes a racetrack rim 1136, as described above. The outlet end can include one or more drain outlets 1140 that may direct exhaust out of the welding cavity, as described above in connection with the drain outlets 440.

The body also includes the inlet coupler 722 having the inlet conduit 726. The inlet conduit is fluidly coupled with multiple (e.g., two) gas channels 1128A, 1128B. The gas channels have curved shapes, such as the shape of the letter C, that bend around the fastener opening on opposite sides of the fastener opening, as shown in Figure 11. The gas channels extend to the inner surface of the body around the welding cavity. For example, the gas channels each has a single nozzle 1130 at a delivery end of the gas channel that is on the inner surface of the body. These nozzles are located closer to the inlet end of the body than the outlet end of the body. As shown in Figure 11, the gas channels do not extend along the length of the body between either lateral side of the body and the welding cavity. This arrangement of the gas channels may provide greater flow of the shield gas into the welding cavity due to a smaller pressure drop (relative to the devices having longer gas channels), but the single nozzle of each gas channel can provide a less even flow of the shield gas across the welding cavity during welding.

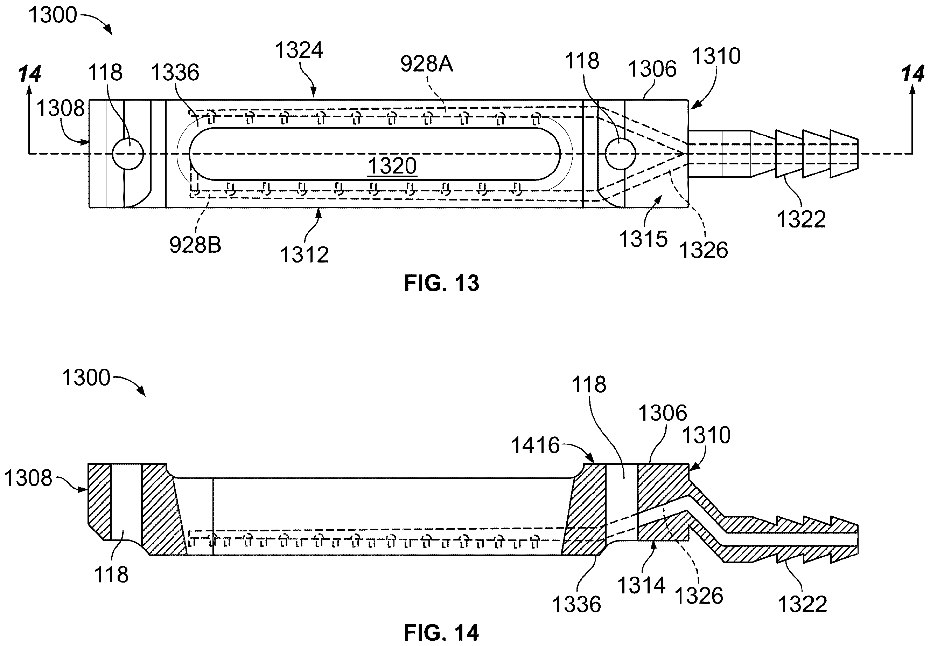

Figure 13 illustrates a bottom plan view of another example of a welding window device 1300. Figure 14 illustrates a cross-sectional view of the welding window device along line 14-14 shown in Figure 13. The device shown in Figures 13 and 14 can represent another example of the welding window device shown in Figure 1. Similar to the device shown in Figure 1, the device 1300 includes an elongated body 1306 that extends from an outlet side 1308 to an inlet side 1310 along the first direction, from a first lateral side 1312 to an opposite lateral side 1324 along the second direction, and from a bottom side 1314 to an opposite upper side 1416 along the third direction. The body frames and defines a welding cavity 1320, and also includes two fastener openings 118 on opposite sides of the welding cavity, as described above. The bottom side of the body includes a racetrack rim 1336, as described above.

In contrast to other welding window devices, the device 1300 does not include any drain outlets through or in the outlet end of the body. The body can include the longitudinally offset gas channels 928A, 928B described above. The body also includes an inlet coupler 1322. The inlet coupler can be barbed, or may include another type of connection (e.g., a threaded connection). In contrast to the inlet couplers of one or more other devices described herein, the inlet coupler of the body 1306 is disposed vertically lower than the coupler 722. For example, a center line or center axis of the coupler 1322 may be lower than the center line or axis of the coupler 722. The inlet coupler and body include an inlet conduit 1326. As shown, the inlet conduit 1326 extends upward toward the inlet end of the body (e.g., in a direction away from the bottom side of the body) and then transitions within the inlet end of the body to extend downward toward the bottom side of the body. Within this downwardly oriented portion, the inlet conduit divides into two separate conduits that downwardly extend on opposite sides of the fastener opening. Each of these separate conduits is fluidly coupled with a different gas channel.

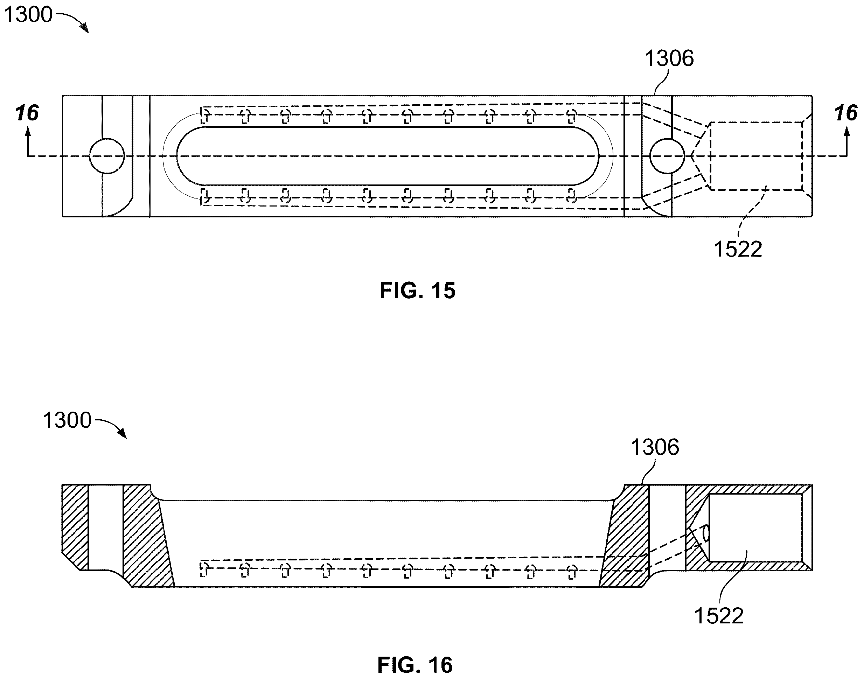

Figure 15 illustrates a bottom plan view of another example of the welding window device 1300. Figure 16 illustrates a cross-sectional view of the welding window device along line 16-16 shown in Figure 15. The embodiment of the device shown in Figures 15 and 16 does not include the inlet coupler that projects from the inlet side of the body 1306. Instead, the body 1306 includes a recessed coupler 1522. This coupler is recessed into the inlet side of the body 1306. The recessed coupler can include threads along the inner surface of the body that surrounds the recessed coupler. The hose or tube from which the shield gas is delivered may include a threaded connector that can be inserted into the recessed coupler. The gas conduits can be fluidly coupled with the recessed coupler to receive the shield gas and deliver the shield gas into the welding cavity.

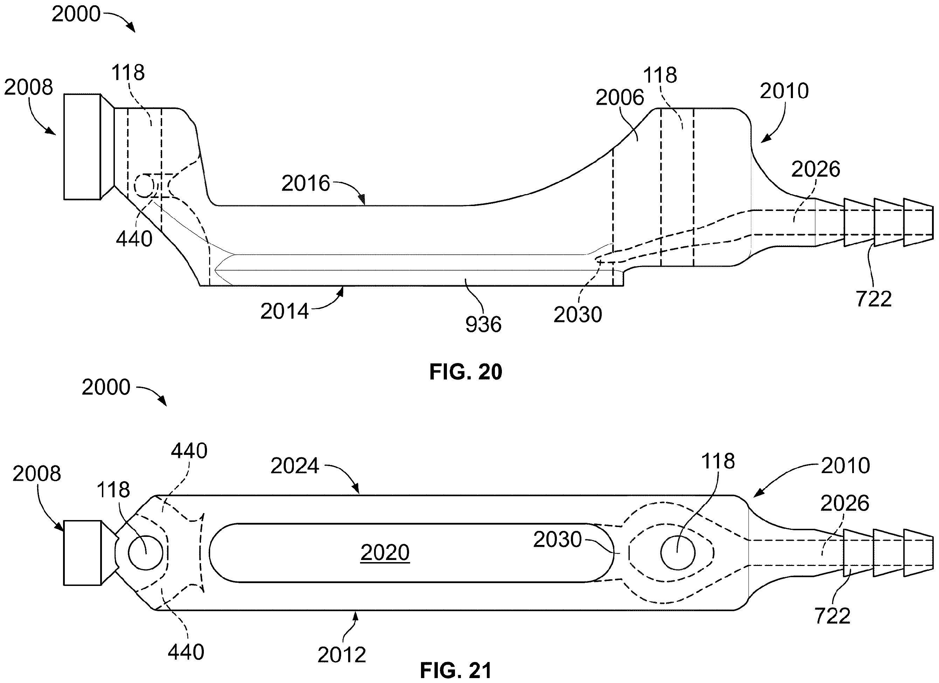

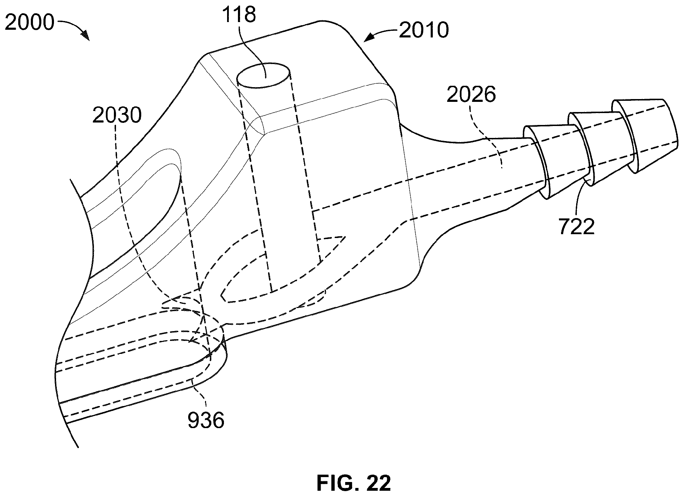

Figure 20 illustrates a side elevational view of another example of a welding window device 2000. Figure 21 illustrates a top plan view of the welding window device shown in Figure 20. Figure 22 illustrates a perspective view of an inlet side 2010 of the welding window device shown in Figures 20 and 21. The device shown in Figures 20 through 22 can represent another example of the welding window device shown in Figure 1. Similar to the device shown in Figure 1, the device shown in Figures 20 through 22 includes an elongated body 2006 that extends from an outlet side 2008 to the inlet side 2010 along the first direction, from a first lateral side 2012 to an opposite lateral side 2024 along the second direction, and from a bottom side 2014 to an opposite upper side 2016 along the third direction. The body frames and defines a welding cavity 2020, and also includes two fastener openings 118 on opposite sides of the welding cavity, with one fastener opening between the outlet end and the welding cavity and another fastener opening between the inlet end and the welding cavity. The bottom side of the body includes the racetrack rim 936, as described above. The outlet end can include one or more of the drain outlets 440.

The body includes the inlet coupler 722 having an inlet conduit 2026. One difference between the device shown in Figures 20 through 22 and the devices shown in Figures 11 through 16 is that the inlet conduit 2026 divides, splits, or bifurcates into multiple (e.g., two) separate branches of conduits within the body between the inlet end and the welding cavity, with the separate branches of conduits re-joining or converging to merge with each other between the fastener opening (that is closer to the inlet end) and the welding cavity. The merged conduit branches then are fluidly coupled with the welding cavity by a single nozzle 2030. This single nozzle can be linearly aligned with the length of the body and the welding cavity of the device (e.g., the single nozzle, the direction along which the body is elongated, and the direction along which the welding cavity is elongated can all extend or be disposed on the first direction). Alternatively, the conduit branches can be fluidly coupled with the welding cavity by multiple nozzles. The separation of the inlet conduit into separate branches can increase the pressure of the gas flowing in the conduit branches, and re-combining the branches prior to the gas reaching the welding cavity can provide for a more even flow of the gas across and/or throughout the welding cavity (when compared with one or more other devices that do not have branched conduits that merge together).

The nozzle directs the shield gas into the welding cavity, as described above. The inlet conduit may have a circular cross-sectional shape and the nozzle may have the oval shape described above in connection with Figure 6. The transition from the circular cross-section of the inlet conduit to the oval cross-section of the nozzle can form a fish-tail shape, which can increase the pressure of the shield gas as the gas flows out of the conduit and into the welding cavity. This can help ensure that the gas reaches the end of the gas channel.

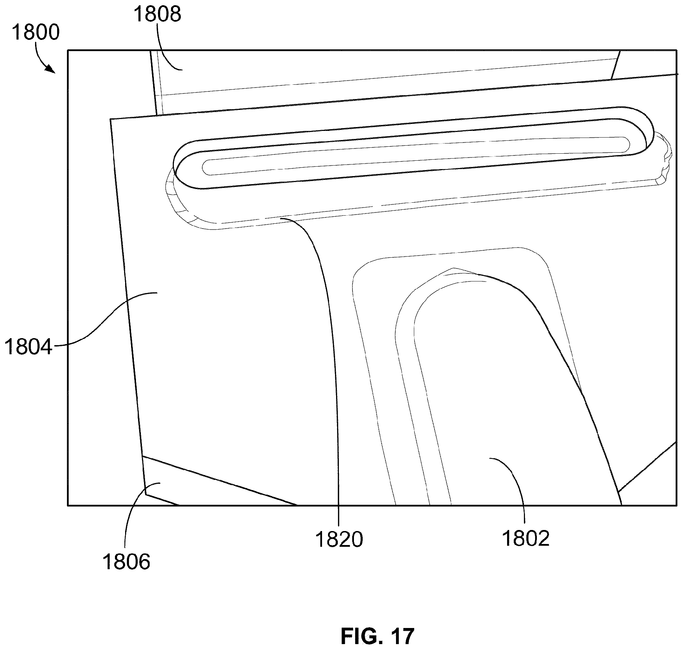

Figure 17 illustrates another example of a welding window device 1800. The welding window device in Figure 17 may coupled with for formed as part of a compliant clamping device, such as a vise grip duck-bill clamp. The clamping device can include handles 1802 that pivot relative to each other when the handles are moved toward each other. This movement causes planar bodies 1804, 1806 of the clamping device to move toward each other. The components being welded together can be secured against each other by the planar bodies being on opposite side of these components and clamping the components together. A welding cavity 1820 can be formed through one of the planar bodies so that laser welding of the components together can be performed within this welding cavity, as described above. The planar body having the welding cavity optionally can include a splatter shield 1808 that projects from the planar body. This splatter shield can be another planar body that projects from the planar body of the clamping device to prevent welding splatter from reaching other parts of the components being welding and/or other components in the vicinity of the welding.

Optionally, one or more of the welding window devices shown and/or described herein can be coupled with a clamping device, such as a vise grip duck-bill clamp. For example, a welding window device can be coupled with the planar body of a vise grip duck-bill clamp. This can allow for the clamp to be used to impart a force on the welding window device onto the components being welded together to ensure uniform contact between the raceway track of the welding window device and the components.

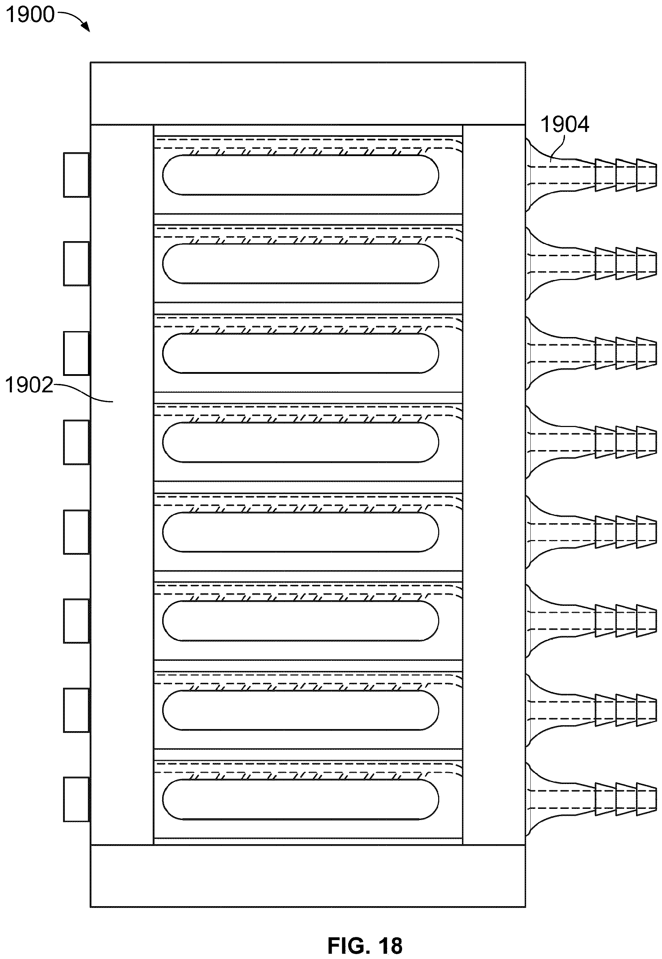

Figure 18 illustrates one example of a multi-welding window device assembly 1900. This assembly includes a frame 1902 to which several welding window devices 1904 are coupled. The welding window devices shown in Figure 18 can represent several instances of any of the welding window devices described herein, or may represent a combination of different embodiments of the welding window devices described herein. The welding window devices can be secured to the frame 1902 (e.g., using welding, fasteners, or the like), and then placed against one or more components to be welded to another component. The frame 1902 can be a box-shaped (or other shape) component that simultaneously holds several welding window devices. For example, the frame 1902 can be formed by several elongated bars or bodies that are joined together. The frame 1902 may be separate from and not coupled to the components that are being welded together. Alternatively, the frame 1902 may be part of at least one of the components being welded together. The frame and welding window devices can be included in a kit of parts, where the frame and the welding window devices are configured for the two or more of the welding window devices to be coupled with the frame. The welding window devices can be coupled to the frame in locations for concurrent or simultaneous welding of components together within the welding cavities of the welding window devices.

Each of the welding window devices can be fluidly coupled with a source of shield gas (e.g., the same source for multiple or all devices, or separate sources for different devices), as described above. Each of the welding window devices can then be used to concurrently or simultaneously weld components together within the welding cavities of the devices. This can allow for faster welding of multiple or many components when compared to individually coupling a welding window device to each location where a weld is needed and sequentially welding the components together.

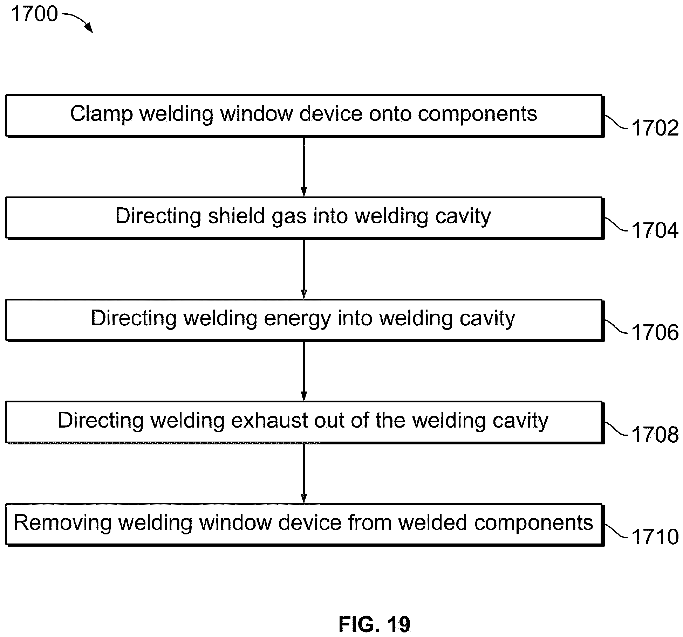

Figure 19 illustrates a flowchart of one example of a method 1700 for welding using a welding window device. The method may be used to weld components together within a welding window of one or more embodiments of the welding window devices described herein. At 1702, a welding window device is clamped onto components or bodies being welded together. For example, fasteners may be placed through fastener openings in the welding window device and openings in the components being welded together. The fasteners may be used to exert a compressive force that clamps the welding window device onto at least one of the components.

At 1704, a shield or curtain gas is directed into the welding cavity. A container of the gas can be coupled with an inlet conduit of the welding window device. Internal conduits of the welding window device can direct this gas to nozzles oriented into the welding window. The gas can fill or substantially fill the cavity (e.g., the welding cavity is filled such that at least 70% of the volume of the cavity contains the gas, at least 80% of the volume of the cavity contains the gas, at least 90% of the volume of the cavity contains the gas, at least 95% of the volume of the cavity contains the gas, or at least 98% of the volume of the cavity contains the gas in different embodiments).

At 1706, a welding energy is directed into the welding cavity. For example, a laser can be directed into the welding cavity and onto the components being welded together. The shield gas can provide an atmosphere within the welding cavity in which the welding is performed. At 1708, exhaust from the welding is directed out of the welding cavity. For example, the welding exhaust can flow out of the welding cavity via the drain holes. The flow of shield gas into the welding cavity can cause the exhaust in the welding cavity to flow out of the welding cavity through the drain holes.

At 1710, the welding window device can be removed from the components that are welded together. For example, the fasteners can be removed to remove the welding window device. Optionally, the welding window device can be left fastened to the components after welding is complete.

In one example, a welding window device includes an elongated body extending from an inlet end to an opposite outlet end in a first direction, extending from a first lateral side to an opposite, second lateral side in a second direction that is transverse to the first direction, and extending from a bottom side to an opposite top side in a third direction that is transverse to the first direction and the second direction. The body defines a welding cavity that extends through the body from the top side to the bottom side. The welding cavity is framed by the inlet end, the outlet end, the first lateral side, and the second lateral side. The body includes one or more gas channels inwardly extending through one or more of the first lateral side or the second lateral side from an inlet opening in the inlet end toward the outlet end of the body. The one or more gas channels include nozzle openings inwardly oriented toward the welding cavity. The one or more gas channels are positioned in the body to direct a gas into the welding cavity during welding of other bodies together within the welding cavity.

Optionally, the body includes one or more drain outlets extending from the welding cavity through the outlet end of the body.

Optionally, the one or more gas channels are disposed in only one of the first lateral side or the second lateral side of the body.

Optionally, the bottom side of the body includes a race track rim that encircles at least a portion of the welding cavity along the bottom side and that protrudes from the bottom side away from the welding cavity.

Optionally, the body has a thickness dimension measured from the bottom side to the top side that is prevents splatter from welding within the welding cavity from escaping the welding cavity.

Optionally, the nozzle openings extend from the one or more gas channels at a transverse angle oriented away from the inlet end of the body.

Optionally, the one or more gas channels are curved within the body between the inlet end of the body and the welding cavity.

Optionally, the one or more gas channels curve downward toward the bottom side of the body between the inlet end of the body and the welding cavity.

Optionally, the one or more gas channels curve outward toward the first lateral side or the second lateral side of the body between the inlet end of the body and the welding cavity.

Optionally, the one or more gas channels curve downward toward the bottom side of the body between the inlet end of the body and the welding cavity and the one or more gas channels curve outward toward the first lateral side or the second lateral side of the body between the inlet end of the body and the welding cavity.

Optionally, the body is formed from one or more of stainless steel, copper, a copper alloy, inconel, an inconel alloy, magnesium, a magnesium alloy, a ceramic matrix composite, an ultra-high-temperature ceramic, polyphenylene sulfide, liquid crystal polymer polyetheretherketone, polyphthalamide, polysulfones, polyetherimides, or polyphenylsulfone.

Optionally, the body is coupled with or formed into a clamping device configured to impart a force on the body and two or more components being welded together within the welding cavity of the body.

A method (for welding bodies to each other) includes clamping a welding window device onto a first body that is to be welded to a second body and directing a curtain gas into one or more gas channels extending into the welding window device. The one or more gas channels are shaped to direct the curtain gas into a welding cavity formed by the welding window device. The method also includes directing energy into the welding cavity of the welding window device to weld the first body to the second body inside the welding cavity and within the curtain gas in the welding cavity.

Optionally, the method also includes exhausting the curtain gas and one or more other gaseous components out of the welding cavity through one or more drain outlets extending from the welding cavity through an outlet end of the welding window device.

Optionally, clamping the welding window device onto the first body includes pressing, into the first body, a race track rim that encircles the welding cavity along a bottom side of the welding window device and that protrudes from the bottom side away from the welding cavity.

Optionally, the method also includes containing splatter from welding within the welding cavity using the welding window device.

Another welding device includes an elongated body extending from an inlet end to an opposite outlet end in a first direction, extending from a first lateral side to an opposite, second lateral side in a second direction that is transverse to the first direction, and extending from a bottom side to an opposite top side in a third direction that is transverse to the first direction and the second direction. The body defines a welding cavity that extends through the body from the top side to the bottom side. The welding cavity is framed by the inlet end, the outlet end, the first lateral side, and the second lateral side. The bottom side of the body includes a race track rim that at least partially encircles the welding cavity along the bottom side and that protrudes from the bottom side away from the welding cavity. The race track rim is positioned on the body to be in biasing contact with one or more other bodies during a welding operation within the welding cavity.

Optionally, the body includes one or more gas channels inwardly extending through one or more of the first lateral side or the second lateral side from an inlet opening in the inlet end toward the outlet end of the body. The one or more gas channels can include nozzle openings inwardly oriented toward the welding cavity. The one or more gas channels can be positioned in the body to direct a gas into the welding cavity during welding of other bodies together within the welding cavity.

Optionally, the one or more gas channels are curved within the body between the inlet end of the body and the welding cavity.

Optionally, the body is a monolithic additively manufactured structure with interior surfaces that define the one or more gas channels, and at least one of the gas channels is non-linear and curves downward toward the bottom side of the body between the inlet end of the body and the welding cavity and the one or more gas channels curve outward toward the first lateral side or the second lateral side of the body between the inlet end of the body and the welding cavity.

Optionally, the body includes one or more drain outlets extending from the welding cavity through the outlet end of the body.

Optionally, the body has a thickness dimension measured from the bottom side to the top side that reduces or prevents splatter from welding within the welding cavity from escaping the welding cavity.

A welding assembly includes a frame and two or more of the welding window devices coupled with the frame. The welding window devices are coupled to the frame in locations for concurrent or simultaneous welding of components together within the welding cavities of the welding window devices.

A kit of parts includes a frame and two or more of the welding window devices. The frame and the two or more of the welding window devices are configured for the two or more of the welding window devices to be coupled with the frame. The welding window devices are configured to be coupled to the frame in locations for concurrent or simultaneous welding of components together within the welding cavities of the welding window devices.

Optionally, the two or more of the welding window devices are coupled with the frame in the locations for the concurrent or simultaneous welding of components together within the welding cavities of the welding window devices.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A welding window device comprising:
an elongated body extending from an inlet end to an opposite outlet end in a first direction, extending from a first lateral side to an opposite, second lateral side in a second direction that is transverse to the first direction, and extending from a bottom side to an opposite top side in a third direction that is transverse to the first direction and the second direction,
the body defining a welding cavity that extends through the body from the top side to the bottom side, the welding cavity framed by the inlet end, the outlet end, the first lateral side, and the second lateral side,
the body including one or more gas channels inwardly extending through one or more of the first lateral side or the second lateral side from an inlet opening in the inlet end toward the outlet end of the body, the one or more gas channels including nozzle openings inwardly oriented toward the welding cavity,
the one or more gas channels positioned in the body to direct a gas into the welding cavity during welding of other bodies together within the welding cavity.

2. The welding window device of claim 1, wherein the body includes one or more drain outlets extending from the welding cavity through the outlet end of the body and/or wherein the one or more gas channels are disposed in only one of the first lateral side or the second lateral side of the body.

3. The welding window device of claim 1 or 2, wherein the bottom side of the body includes a race track rim that encircles at least a portion of the welding cavity along the bottom side and that protrudes from the bottom side away from the welding cavity and/or wherein the body has a thickness dimension measured from the bottom side to the top side that is prevents splatter from welding within the welding cavity from escaping the welding cavity.

4. The welding window device of any one of claims 1 to 3, wherein the nozzle openings extend from the one or more gas channels at a transverse angle oriented away from the inlet end of the body.

5. The welding window device of any one of claims 1 to 4, wherein the one or more gas channels are curved within the body between the inlet end of the body and the welding cavity.

6. The welding window device of claim 5, wherein the one or more gas channels curve downward toward the bottom side of the body between the inlet end of the body and the welding cavity.

7. The welding window device of claim 5 or 6, wherein the one or more gas channels curve outward toward the first lateral side or the second lateral side of the body between the inlet end of the body and the welding cavity.

8. The welding window device of any one of claims 5 to 7, wherein the one or more gas channels curve downward toward the bottom side of the body between the inlet end of the body and the welding cavity and the one or more gas channels curve outward toward the first lateral side or the second lateral side of the body between the inlet end of the body and the welding cavity.

9. The welding window device of any one of claims 1 to 8, wherein the body is formed from one or more of stainless steel, copper, a copper alloy, inconel, an inconel alloy, magnesium, a magnesium alloy, a ceramic matrix composite, an ultra-high-temperature ceramic, polyphenylene sulfide, liquid crystal polymer polyetheretherketone, polyphthalamide, polysulfones, polyetherimides, or polyphenylsulfone and/or wherein the body is coupled with or formed into a clamping device configured to impart a force on the body and two or more components being welded together within the welding cavity of the body.

10. A method comprising:
clamping a welding window device onto a first body that is to be welded to a second body;
directing a curtain gas into one or more gas channels extending into the welding window device, the one or more gas channels shaped to direct the curtain gas into a welding cavity formed by the welding window device; and
directing energy into the welding cavity of the welding window device to weld the first body to the second body inside the welding cavity and within the curtain gas in the welding cavity,
wherein clamping the welding window device onto the first body preferrably includes pressing, into the first body, a race track rim that encircles the welding cavity along a bottom side of the welding window device and that protrudes from the bottom side away from the welding cavity.

11. The method of claim 10, further comprising exhausting the curtain gas and one or more other gaseous components out of the welding cavity through one or more drain outlets extending from the welding cavity through an outlet end of the welding window device and/or further comprising containing splatter from welding within the welding cavity using the welding window device.

12. A welding device comprising:
an elongated body extending from an inlet end to an opposite outlet end in a first direction, extending from a first lateral side to an opposite, second lateral side in a second direction that is transverse to the first direction, and extending from a bottom side to an opposite top side in a third direction that is transverse to the first direction and the second direction,
the body defining a welding cavity that extends through the body from the top side to the bottom side, the welding cavity framed by the inlet end, the outlet end, the first lateral side, and the second lateral side, and
the bottom side of the body includes a race track rim that at least partially encircles the welding cavity along the bottom side and that protrudes from the bottom side away from the welding cavity, the race track rim positioned on the body to be in biasing contact with one or more other bodies during a welding operation within the welding cavity.

13. The welding device of claim 12, wherein the body includes one or more gas channels inwardly extending through one or more of the first lateral side or the second lateral side from an inlet opening in the inlet end toward the outlet end of the body, the one or more gas channels including nozzle openings inwardly oriented toward the welding cavity,
the one or more gas channels positioned in the body to direct a gas into the welding cavity during welding of other bodies together within the welding cavity.

14. The welding device of claim 13, wherein the body is a monolithic additively manufactured structure with interior surfaces that define the one or more gas channels, and at least one of the gas channels is non-linear and curves downward toward the bottom side of the body between the inlet end of the body and the welding cavity and the one or more gas channels curve outward toward the first lateral side or the second lateral side of the body between the inlet end of the body and the welding cavity.

15. A kit of parts comprising:
a frame; and
two or more of the welding window devices of claim 1, wherein the frame and said two or more of the welding window devices are configured for the two or more of the welding window devices to be coupled with the frame, the welding window devices configured to be coupled to the frame in locations for concurrent or simultaneous welding of components together within the welding cavities of the welding window devices.
